# EUROPÄISCHE PATENTSCHRIFT

(11) **EP 3 568 295 B1**
(45) Veröffentlichungstag und Bekanntmachung des Hinweises auf die Patenterteilung: **24.02.2021**
(21) Anmeldenummer: 18717839.7
(22) Anmeldetag: 16.01.2018
(51) Int. Cl.: B32B 15/04, B32B 15/20, B32B 3/30, B62D 29/04

(54) **KRAFT- UND NUTZFAHRZEUGAUFLAGEVORRICHTUNG**
SUPPORT DEVICE FOR A MOTOR VEHICLE AND COMMERCIAL VEHICLE
DISPOSITIF SUPPORT POUR UN VÉHICULE AUTOMOBILE ET UTILITAIRE

(30) Priorität: 16.01.2017 DE 102017100756
(43) Veröffentlichungstag der Anmeldung: 20.11.2019
(73) Patentinhaber: Lohmann GmbH & Co. KG, 56567 Neuwied (DE); Logis AG, 84431 Heldenstein (DE); Logis Innovations GmbH, 84431 Heldenstein (DE); Logis Technologies GmbH, 84431 Heldenstein (DE)
(72) Erfinder: FOGEL, Thomas, 56587 Oberraden (DE); FRIEB, Christoph, 97483 Eltmann (DE); HAAG, Martin, 81679 München (DE)
(74) Vertreter: Okoampah, Rene
(86) Internationale Anmeldenummer: PCT/EP2018/051002
(87) Internationale Veröffentlichungsnummer: WO 2018/130719

(56) Entgegenhaltungen:
- EP-A1- 1 097 798
- EP-A1- 2 789 501
- WO-A1-01/29143
- WO-A1-2015/082634
- WO-A2-2008/070064
- DE-T2- 69 822 483
- DE-T2- 69 822 483
- US-A1- 2008 084 083
- US-A1- 2014 312 642

## Beschreibung

### Technisches Gebiet

Die vorliegende Erfindung betrifft eine Kraft- und Nutzfahrzeugauflagevorrichtung für eine Ladebordwand, eine Seitenwand, eine Überfahrrampe und/oder einen Boden eines Kraft- und Nutzfahrzeugs.

### Stand der Technik

Kraft- und Nutzfahrzeugauflagevorrichtungen für Ladebordwände, Seitenwände, Überfahrrampe und/oder Böden von Kraft- und Nutzfahrzeugen sind schon seit langem bekannt, ebenso bekannt ist auch der Einsatz von Leichtbauplatten. So beschreiben EP 2 392 453 A1 und ähnlich EP 2 116 449 A1 ein Paneel eines Kofferaufbaus eines Nutzfahrzeugs, bestehend aus zwei Decklagen und einer zwischen den Decklagen angeordneten Kernlage, wobei wenigstens eine der beiden Decklagen aus Blech und die Kernlage aus geschäumtem Kunststoff gebildet werden. EP 2 116 459 B1 beansprucht ein Verfahren zum Herstellen eines Bodenelements für beispielsweise einen LKW mit einer oberen Decklage aus einer außen liegenden metallischen Deckschicht und einer innen liegenden Tragschicht sowie einer unteren Decklage als Abschluss des Bodenelements zum Fahrzeug hin, wobei zur Stabilisierung des Konstrukts quer zur Längsrichtung des Bodenelements ausgerichtete und beabstandet zueinander angebrachte Querstege miteinander verklebt werden, die den zwischen den Decklagen vorhandenen Raum in Kammern unterteilen.

Verbundplatten sind auch aus EP 0 616 985 B1 bekannt. Solche Verbundplatten enthalten zwei Deckschichten aus Metall und/oder Kunststoff mit einem dazwischen liegenden Kern, der in diesem Fall eine Mischung eines Füllmaterials mit Aluminiumhydroxyd und ein organisches Bindemittel auf Basis von Polymeren enthält. Eine Ladefläche für Fahrzeuge wie Kippfahrzeuge ist in der DE 196 03 781 A1 gezeigt. Die Bordwände und Bodenfläche sind mit lärmdämmenden Matten oder Platten beschichtet. DE 103 11 939 A1 beschreibt eine Fußbodenkonstruktion für den Laderaum eines Fahrzeugs mit einer Deck und/oder einer Bodenplatte, wobei die Fußbodenkonstruktion aus einem ausgehärteten Zellensystem aus Kunststoff besteht, wobei die Zellen durch Zwischenwände getrennt sind. DE 40 40 284 A1 zeigt die Konstruktion von Flächenelementen für einen Pritschenkasten von Lastkraftwägen. Die Flächenelemente bestehen aus einem Außenblech, einem Innenblech, einer an der Innenseite wenigstens eines der Bleche anliegenden und mit ihr klebend verbundenen Glasfasermatte, einer den verbleibenden Raum ausfüllenden Honigwabenmatte und einer die Zellen der Honigwabenmatte ausfüllenden Hartausschäumung. Die Kraft- und Nutzfahrzeugauflagevorrichtungen sind in der Regel jeweils nur für spezielle Anwendungsbereiche geeignet. Zur Anbringung und Funktionalisierung der Kraft- und Nutzfahrzeugauflagevorrichtungen sind zusätzliche Produkte und Materialen sowie zusätzliche Arbeitsschritte nötig. Dies wirkt sich nachteilig auf das Nachrüsten oder den Austausch von Kraft-und Nutzfahrzeugauflagevorrichtungen aus. Die Anzahl der erforderlichen Arbeitsschritte und die zusätzlich benötigten Produkte sorgen für vergleichsweise hohe Standzeiten und Anschaffungskosten.

Darüber hinaus weisen viele der bekannten Kraft- und Nutzfahrzeugauflagevorrichtungen eine vergleichsweise geringe Lebensdauer auf, da ihre Oberflächen ungeschützt einer hoch frequentierten Krafteinwirkung ungeschützt ausgesetzt sind.

### Darstellung der Erfindung

Ausgehend von dem bekannten Stand der Technik ist es eine Aufgabe der vorliegenden Erfindung, eine verbesserte Kraft- und Nutzfahrzeugauflagevorrichtung anzugeben.

Diese Aufgabe wird mittels einer Vorrichtung mit den Merkmalen des Anspruchs 1 gelöst. Vorteilhafte Ausgestaltungen ergeben sich aus den Unteransprüchen.

Entsprechend wird eine Kraft- und Nutzfahrzeugauflagevorrichtung für eine Ladebordwand, eine Seitenwand, eine Überfahrrampe und/oder einen Boden eines Kraft- und Nutzfahrzeugs angegeben. Erfindungsgemäß umfasst die Kraft- und Nutzfahrzeugauflagevorrichtung eine Trägerschicht mit einer ersten Oberfläche und einer zweiten Oberfläche, wobei die Trägerschicht eine Leichtbauplatte umfasst, eine auf der ersten Oberfläche angeordnete Deckbeschichtung, wobei die Deckbeschichtung ein Polyurethan, Polyharnstoff und/oder Epoxidharz umfasst, und eine auf der zweiten Oberfläche angeordnete klebende Befestigung, dadurch gekennzeichnet, dass die Leichtbauplatte einen zwischen zwei Aluminiumschichten eingefassten Polymer umfasst.

US 2008/084083 A1 zeigt eine hybride Ladeflächenauskleidung.

EP 2 789 501 A1 zeigt einen Nutzfahrzeugboden mit rutschfester Kunststofffolie.

WO 01/29143 A1 zeigt eine aus einem Fahrzeugverkleidungs- oder innenteil und einem Klebeartikel bestehende Anordnung.

US 2014/312642 A1 zeigt eine Auskleidung und ein Auskleidungssystem für einen Maschinenkörper.

EP 1 097 798 A1 zeigt ein gegossenes Produkt aus Polyurethanchips und ein Verfahren zur Herstellung eines solchen Produkts.

WO 2008/070064 A2 zeigt ein Verbundbauteil und ein Verfahren zu dessen Herstellung.

Die Kombination aus Trägerschicht, Deckbeschichtung und klebender Befestigung bildet ein Fertigprodukt, das die Arbeitsschritte am Einbauort erheblich reduziert. So entfallen aufwendige Beschichtungsvorgänge wie beispielsweise ein Sprühverfahren am Einsatzort. Insbesondere muss der Einbauort nicht aufwendig zu Zwecken der Beschichtung vorbereitet werden. Die Kraft- und Nutzfahrzeugauflagevorrichtung kann so wie sie ist verklebt werden, ohne dass noch zusätzlich ein Klebesystem aufgetragen werden muss. Insgesamt erleichtert und beschleunigt die vorstehend beschriebene Kraft- und Nutzfahrzeugauflagevorrichtung den Einbau.

Darüber hinaus kann bei vergleichsweise geringem Gewicht eine widerstandsfähige Kraft- und Nutzfahrzeugauflagevorrichtung bereitgestellt werden. Die Komponenten der Kraft- und Nutzfahrzeugauflagevorrichtung können derart aufeinander abgestimmt werden, dass auch bei hoher mechanischer Belastung oder starken Temperaturunterschieden die einzelnen Lagen nicht voneinander getrennt werden. Die Trägerschicht verleiht der Kraft- und Nutzfahrzeugauflagevorrichtung ausreichend Festigkeit und Steifigkeit bei vergleichsweise geringem Gewicht. Durch Beschichtung der Trägerschicht mit einem Polyurethan, Polyharnstoff und/oder Epoxidharz umfassenden Kunststoff auf der einen und einem Klebstoff auf der anderen Seite kann eine Verbundfestigkeit bereitgestellt werden, welche auch bei starker Deformation der Vorrichtung gewährleistet ist.

Der für die Deckbeschichtung verwendete Kunststoff kann durch entsprechende Auswahl beziehungsweise Modifikation an das gewünschte Anwendungsgebiet angepasst werden. Somit ergibt sich ein universelles Anwendungsgebiet für die Kraft- und Nutzfahrzeugauflagevorrichtung. Beispielsweise kann die Kraft- und Nutzfahrzeugauflagevorrichtung zur Rutschhemmung eingesetzt werden. Sie kann auf Boden- und Wandbereichen einer Transportfläche eines Kraft- oder Nutzfahrzeugs angebracht werden, um zur Sicherung der Ladung beizutragen. Alternativ kann die Kraft- und Nutzfahrzeugauflagevorrichtung auch ein Gleiten begünstigende Eigenschaft aufweisen. Eine derartige Kraft- und Nutzfahrzeugauflagevorrichtung kann in Bereichen eines Kraft- oder Nutzfahrzeugs zur Anwendung kommen, in welchen die Ladung bei möglichst geringem Widerstand relativ zur Kraft- oder Nutzfahrzeugoberfläche gleiten können soll. So kann beispielsweise die Oberfläche einer Kippermulde mit der Kraft- und Nutzfahrzeugauflagevorrichtung versehen sein, um eine möglichst geringe Gleitreibung zwischen dem Ladegut und der Kippermulde bereitzustellen. Darüber hinaus kann die Kraft- und Nutzfahrzeugauflagevorrichtung zur Geräuschdämmung beitragen. Dies wird durch die Deckbeschichtung aus Polyurethan, Polyharnstoff und/oder Epoxidharz ermöglicht. Wird beispielsweise eine Überfahrrampe mit der Kraft- und Nutzfahrzeugauflagevorrichtung ausgestattet, kann eine störende Geräuschentwicklung beim Be- und Entladen des Kraft- oder Nutzfahrzeugs verhindert oder reduziert werden.

Des Weiteren kann die Kraft- und Nutzfahrzeugauflagevorrichtung auch zu wärmeisolierenden Zwecken eingesetzt werden.

In einer bevorzugten Ausgestaltung umfasst die Leichtbauplatte Kunststoffe, Leichtmetalle, wie zum Beispiel Aluminium, und/oder Faserverbundwerkstoffe oder eine Kombination daraus. Die Leichtbauplatte ermöglicht die Bereitstellung der für die Anwendungen erforderlichen Festigkeit bei verhältnismäßig geringem Gewicht. Dies hat den Vorteil, dass sich die Kraft- und Nutzfahrzeugauflagevorrichtung leicht verarbeiten beziehungsweise verbauen lässt. Ein geringes Gewicht der Kraft- und Nutzfahrzeugauflagevorrichtung wirkt sich auch positiv auf das Gesamtgewicht des Kraft- oder Nutzfahrzeugs aus.

Im Fall von Faserverbundwerkstoffen können Verstärkungsfasern in eine Polymermatrix eingebettet werden. Als Verstärkungsfasern können Kohlefasern, Glasfasern, Kunststofffasern, Naturfasern, und/oder Metallfasern zum Einsatz kommen.

Der Einsatz von Aluminium kann neben der Bereitstellung hoher Festigkeiten bei vergleichsweise geringem Gewicht auch die Funktion einer Infrarot reflektierenden Beschichtung übernehmen.

In einer Weiterbildung ist auf der ersten Deckbeschichtung eine zweite Deckbeschichtung angeordnet. Dadurch ist es möglich, eine weitere funktionale Schicht in die Boden-, Wand- und Deckenverkleidung zu integrieren. Alternativ kann die zweite Deckbeschichtung zwischen der ersten Oberfläche der Trägerplatte und der ersten Deckbeschichtung, zwischen der zweiten Oberfläche und der Klebstoffschicht oder auf der der Trägerplatte abgewandten Seite der Klebstoffschicht angeordnet sein.

Gemäß der Erfindung umfasst die Leichtbauplatte ein zwischen zwei Aluminiumschichten eingefassten Polymer. Eine derartige Leichtbauplatte weist gegenüber üblichen Kraft- und Nutzfahrzeugauflagevorrichtung eine vergleichsweise geringe Dicke bei hoher Festigkeit und Steifigkeit auf. Beispielsweise kann die Dicke einer Leichtbauplatte bestehend aus einem in Aluminium eingefassten Polymer gegenüber einer beschichteten Siebdruckplatte um 75% reduziert werden. Zusätzlich weist eine derartige Kraft- und Nutzfahrzeugauflagevorrichtung vergleichsweise hohe wärmedämmende Eigenschaften auf.

In einer Weiterbildung umfasst die Leichtbauplatte einen zwischen zwei Aluminiumschichten eingefassten Polymerschaum. Durch Ausbildung der Polymerschicht in Form einer Schaumschicht ist es möglich das Gewicht der Kraft- und Nutzfahrzeugauflagevorrichtung noch weiter zu reduzieren. Eine solche Schicht zeichnet sich neben einem geringen Gewicht durch eine geringe Dicke bei ausreichender Festigkeit aus. Ausreichende Festigkeit bedeutet, dass eine Festigkeit bereitgestellt wird, die für die üblichen Anwendungsfälle von Kraft- und Nutzfahrzeugauflagevorrichtungen ausreichend ist. Ferner eignet sich eine derartige Leichtbauplatte dazu, an die Umgebungsgeometrie angepasst zu werden. So kann die Kraft- und Nutzfahrzeugauflagevorrichtung beispielsweise auch über Eckbereiche durchgehend verbaut werden. Insgesamt stellt eine derartige Leichtbauplatte eine gute Verformbarkeit beim Einbau bereit und kommt mit einem vergleichsweise geringen Gewicht und einer geringen Schichtdicke aus.

Insgesamt kommen einer derartigen Leichtbauplatte die Eigenschaften einer Sandwich-Konstruktion zugute. Somit zeichnet sich die einen Polymerschaum umfassende Leichtbauplatte, welche zwischen zwei Aluminiumschichten eingefasst ist, durch eine vergleichsweise hohe Schubsteifigkeit, eine hohe Tragfähigkeit und allgemeine hohe Steifigkeiten aus. Ferner bewirkt der Polymerschaum vergleichsweise hohe wärmedämmende Eigenschaften.

In einer weiter bevorzugten Ausführungsform ist der Polymerschaum ein Polypropylenschaum oder ein Polyethylenschaum. Aufgrund der geringen Dichte des Polypropylenschaums kann eine vergleichsweise leichte Leichtbauplatte bereitgestellt werden. Zusätzlich weist Polypropylen eine hohe Widerstandsfähigkeit gegen Ermüdung auf. Dies ist gerade dann vorteilhaft, wenn die Kraft-und Nutzfahrzeugauflagevorrichtung eine häufige Krafteinwirkung erfährt, wie zum Beispiel im Fall einer Überfahrrampe.

In einer weiteren bevorzugten Weiterbildung sind die Festigkeiten der Leichtbauplatte größer als die Festigkeiten der Deckbeschichtung. Dadurch ist es möglich, beispielsweise im Fall von einem unebenen Untergrund, Überbrückungen bereitzustellen. Trotz solcher Unebenheiten können die Eigenschaften der funktionalen Deckschicht ganzflächig genutzt werden.

Dieses Verhältnis der Festigkeiten zwischen der Leichtbauplatte und der Deckbeschichtung ermöglicht eine verbesserte Druckverteilung beim lokalen Einwirken einer Kraft auf die Kraft- und Nutzfahrzeugauflag evorrichtung.

In einer weiter bevorzugten Ausgestaltung liegt das Flächengewichtsverhältnis der Trägerschicht gegenüber der Deckbeschichtung und der klebenden Befestigung in einem Bereich von 2 bis 5.

In einer weiter bevorzugten Ausführungsform weist die Deckbeschichtung einen Rutschhemmungswert von mindestens R10 auf. Eine Rutschhemmung von R10 nach DIN 51130 macht den Einsatz von Antirutschmatten überflüssig. Darüber hinaus kann Ladung mit vergleichsweise weniger Zurrgurten gesichert werden. Insgesamt können so die Be- und Entladezeiten verkürzt und die Unfallgefahr der Mitarbeiter reduziert werden. Insgesamt können die Kosten gesenkt werden.

In einer bevorzugten Ausgestaltung weist die Deckbeschichtung einen Gleitreibwert von mindestens 0,6 µD auf. Dieser Gleitreibbeiwerte ist zertifiziert nach VDI-Richtlinie 2700/Blatt 14. Die angegebenen Gleitreibbeiwerte sind Grundlage für die Dimensionierung der Ladungssicherung nach DIN-EN 12195-1 (06/2011). Entsprechend ermöglicht die Kraft- und Nutzfahrzeugauflagevorrichtung überdurchschnittlich hohe Ladungssicherungseigenschaften im trockenen als auch im nassen Zustand.

In einer bevorzugten Ausführungsform weist die Deckbeschichtung eine äußere Oberfläche auf, die glatt, rau oder strukturiert ist. Die Deckbeschichtung kann an den entsprechenden Anwendungsfall angepasst sein. Sind gleitende Eigenschaften der Kraft- und Nutzfahrzeugauflagevorrichtung gefragt, kann die Deckbeschichtung glatt ausgestaltet sein und über entsprechend geringe Gleitreibwerte verfügen. Erfordert der Anwendungsfall hingegen die Bereitstellung einer Rutschhemmung, kann die Deckbeschichtung rau oder strukturiert ausgebildet sein.

In einer Weiterbildung weist die Deckbeschichtung eine Bruchdehnung von mindestens 150% auf. Dadurch können hohe Temperaturunterschiede kompensiert werden, ohne dass es zu einer Rissbildung in der Deckbeschichtung kommt.

In einer weiter bevorzugten Ausführungsform umfasst die klebende Befestigung ein trägerbasiertes Klebeband, ein Transferklebeband oder einen Flüssigklebstoff.

Ein trägerbasiertes Klebeband, insbesondere ein doppelseitiges trägerbasiertes Haftklebeband hat die Möglichkeit, über das Trägermaterial und dessen Eigenschaften (Schaum, Papier, Folie) zum Beispiel seine elastischen Eigenschaften steuern zu können. Darüber hinaus kann durch die Wahl der Klebstoffarten auf beiden Seiten des Trägermaterials die Verklebung mit unterschiedlichen Oberflächen besser auf die jeweiligen Eigenarten der zu verbindenden Oberflächen abgestimmt werden.

Ähnliche Eigenschaften gelten für ein trägerloses Transferhaftklebeband, hier können zum Beispiel auch zwei unterschiedliche Klebstoffarten direkt aufeinander beschichtet werden und damit unterschiedlichen zu verklebenden Oberflächen Rechnung tragen. In der Regel handelt es sich aber um eine homogene klebende Befestigung aus lediglich einem Material. Was die Elastizität angeht, so ist ein Transferklebeband einem doppelseitigen Klebeband mit einem Schaumträger deutlich unterlegen, dafür ist es in der Regel aber kostengünstiger, da kein Trägermaterial benötigt wird.

Flüssigklebstoffe werden zur strukturellen Verklebung eingesetzt, das heißt sie werden direkt am Anwendungsort auf einen oder beide Fügepartner aufgetragen, die dann miteinander in Verbindung gebracht werden und zum Beispiel unter Druck oder Temperatureinwirkung miteinander verkleben.

Darüber hinaus gibt es mittlerweile auch Klebebänder für strukturelle Verklebungen. Der Begriff strukturell bedeutet hier, dass die Verbindung nach der Verklebung eine einheitliche Struktur aufweist. Ein eventuelles Aufbrechen der Verbindung erfolgt nicht mehr unbedingt an der Verklebungsstelle, sondern irgendwo im System, zum Beispiel in einem der Fügepartner. In der Regel erfolgt bei strukturellen Verklebungen die Verklebung unter Einwirkung von Druck, Temperatur und/oder Feuchtigkeit, wodurch der Klebstoff aushärten kann, sodass die klebende Verbindung hergestellt werden kann.

Solche Verbindungen sind wie auch Flüssigverklebungen deutlich stärker und langlebiger, können höhere Belastungen aushalten, lassen sich aber auch nicht ohne Beschädigungen der Fügepartner wieder trennen. Sie benötigen in der Lagerung und Verarbeitung in der Regel einen höheren Aufwand. Beispielsweise kann eine Lagerung bei niedrigen Temperaturen erforderlich sein, um ein vorzeitiges Aushärten zu verhindern.

In einer weiter bevorzugten Weiterbildung umfasst das trägerbasierte Klebeband einen weichelastischen Träger, bevorzugt einen Schaumträger. Dadurch kann die klebende Befestigung auch als Ausgleichschicht für unebene Untergründe fungieren. Darüber hinaus erhöht der weichelastische Träger der klebenden Befestigung die geräuschdämmende Eigenschaft der Kraft- und Nutzfahrzeugauflag evorrichtung.

In einer weiter bevorzugten Ausgestaltung umfasst die klebende Befestigung Acrylate, Polyurethan, Epoxide, Silikon und/oder Kautschuk.

In einer weiter bevorzugten Ausführungsform ist auf einer äußeren Oberfläche der klebenden Befestigung eine Abreißfolie angeordnet. Die Abreißfolie, auch Release-Liner genannt, ermöglicht zum einen eine einfache Lagerung. Die Kraft- und Nutzfahrzeugauflagevorrichtung kann dadurch gestapelt werden. Zum anderen ist die Kraft- und Nutzfahrzeugauflagevorrichtung aufgrund der Abreißfolie bearbeitungsfertig. Nach dem Abziehen der Abreißfolie kann die Kraft- und Nutzfahrzeugauflagevorrichtung direkt auf den Anwendungsort appliziert werden.

In einer weiteren Ausgestaltung ist in den Lagenaufbau der Deckbeschichtung, der Trägerschicht und der klebenden Befestigung ein zusätzliches Befestigungsmittel zum Befestigen der Kraft-und Nutzfahrzeugauflagevorrichtung auf einem Untergrund eines Kraft- oder Nutzfahrzeugs integriert. Dadurch kann ein Teil der auf die Kraft- und Nutzfahrzeugauflagevorrichtungen wirkenden Kräfte aufgenommen werden, wodurch die klebende Befestigung entlastet werden kann. Ferner kann sichergestellt werden, dass bei einem Versagen der klebenden Befestigung aufgrund von zum Beispiel Alterungserscheinungen, Witterungseinflüssen oder chemischen Einflüssen, welche beispielsweise durch das Austreten von chemischen Ladungsgütern auftreten können, die Kraft-und Nutzfahrzeugauflagevorrichtung sicher auf dem Untergrund des Kraft- oder Nutzfahrzeugs gehalten wird.

Das Befestigungsmittel kann in Form von Schrauben, Nägeln, Saugpfropfen oder Klettverschluss ausgebildet sein. Des Weiteren kann das Mittel zum Befestigen auch in Form eines Permanentmagneten ausgeführt sein, der in der Trägerschicht integriert ist.

In einer Weiterbildung weist die Deckbeschichtung eine flammhemmende Zusammensetzung auf. Diese kann beispielsweise 20 bis80 Gew.-% einer Polycarbonatzusammensetzung, 1 bis 20 Gew.-% eines laseraktivierbaren Additivs und 1 bis 20 Gew.-% einer Phosphazen-Verbindung umfassen. Der Kraft- und Nutzfahrzeugauflagevorrichtung kommt dadurch eine zusätzliche flammhemmende Wirkung zu.

In einer bevorzugten Ausführungsform ist in der Trägerschicht oder der ersten Deckbeschichtung mindestens ein Transponder, bevorzugt ein RFID-Transponder integriert. Dadurch kann eine Interaktion der Kraft- und Nutzfahrzeugauflagevorrichtung mit der Umgebung ermöglicht werden. Je nach Art des verwendeten Transponders können beispielsweise bewegliche Objekte, die sich auf der Kraft- und Nutzfahrzeugauflagevorrichtungen befinden, identifiziert werden.

Die oben genannte Aufgabe wird auch durch ein Verfahren mit den Merkmalen des Anspruchs 16 gelöst. Entsprechend wird ein Verfahren zur Herstellung einer Kraft- und Nutzfahrzeugauflagevorrichtung angegeben, welches die folgenden Schritte umfasst: Bereitstellen der Trägerschicht, Aufbringen der klebenden Befestigung auf der zweiten Oberfläche der Trägerschicht, und Beschichten der ersten Oberfläche der Trägerschicht mit der Deckbeschichtung im Sprüh- oder Gießverfahren. Durch das Aufbringen der Deckbeschichtung im Sprüh- oder Gießverfahren können die Eigenschaften der Deckbeschichtung bei der Produktion relativ schnell und unkompliziert eingestellt werden. So können Schichtdicken variiert oder Zusätze nach Belieben beigegeben werden.

In einer weiter bevorzugten Ausgestaltung werden beim Beschichten der Trägerschicht mit der Deckbeschichtung Feststoffkörper, wie zum Beispiel Hartkorn, mit versprüht oder vergossen. Somit ist kein zusätzlicher Bearbeitungsschritt nötig, um beispielsweise eine raue Oberfläche der Deckbeschichtung zu erzeugen. In einem abschließenden Sprühauftragschritt kann die Sprühbeschichtung aus einem Abstand erfolgen, der derart bemessen ist, dass ein aufgesprühter Kunststoff zu reagieren beginnt, bevor er die Deckbeschichtung erreicht, wodurch eine unebene Oberfläche auf der Deckbeschichtung erzeugt wird.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: (nicht erfindungsgemäß) schematisch eine Schnittansicht des Lagenaufbaus einer Kraft- und Nutzfahrzeugauflagevorrichtung,
- Figur 2: (nicht erfindungsgemäß) schematisch eine Schnittansicht der Kraft- und Nutzfahrzeugauflagevorrichtung aus Figur 1 mit einer Abreißfolie,
- Figur 3: schematisch eine Schnittansicht einer Kraft- und Nutzfahrzeugauflagevorrichtung, welche eine Leichtbauplatte aus einem in zwei Aluminiumschichten eingefassten Polymerschaum umfasst,
- Figur 4: schematisch eine Schnittansicht der Kraft- und Nutzfahrzeugauflagevorrichtung aus Figur 3, in einem auf einen unebenen Untergrund aufgebrachten Zustand,
- Figur 5: schematisch eine Schnittansicht der Kraft- und Nutzfahrzeugauflagevorrichtung mit einem trägerbasierten Klebeband,
- Figur 6: schematisch die Schnittansicht der Kraft- und Nutzfahrzeugauflagevorrichtung aus Figur 5 auf einem unebenen Untergrund,
- Figur 7: schematisch eine Schnittansicht der Kraft- und Nutzfahrzeugauflagevorrichtung mit drei Klebeschichten,
- Figur 8: (nicht erfindungsgemäß) schematisch eine Schnittansicht der Kraft- und Nutzfahrzeugauflagevorrichtung mit an die Trägerschicht angepassten Klebeschichten, und
- Figur 9: schematisch eine Schnittansicht der Kraft- und Nutzfahrzeugauflagevorrichtung mit einer zwei Träger umfassenden Klebeschicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleich wirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

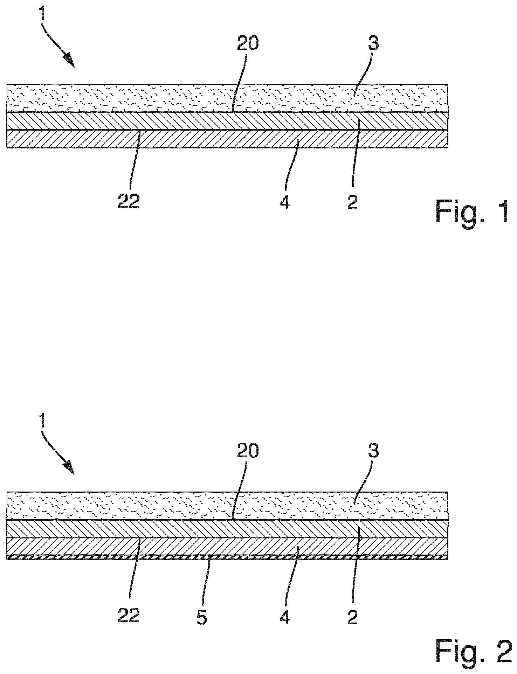

Figur 1 (nicht erfindungsgemäß) zeigt eine Schnittansicht einer Kraft- und Nutzfahrzeugauflagevorrichtung 1. Die Kraft- und Nutzfahrzeugauflagevorrichtung 1 besteht aus einem Lagenaufbau, welcher eine Trägerschicht 2 in Form einer Leichtbauplatte aufweist. Im vorliegenden Fall ist die Leichtbauplatte aus Aluminium gefertigt. Alternativ kann die Leichtbauplatte auch aus anderen Materialien, wie zum Beispiel Kunststoffen gefertigt sein. Von den Kunststoffen können beispielsweise Leichtbauplatten aus Faserverbundwerkstoffen zum Einsatz kommen. So zum Beispiel in eine Polymermatrix eingebettete Verstärkungsfasern. Als Verstärkungsfasern können Kohlefasern, Glasfasern, Kunststofffasern, Naturfasern, oder Metallfasern zum Einsatz kommen.

Die Trägerschicht 2 weist eine erste Oberfläche 20 und eine zweite Oberfläche 22 auf. Die erste Oberfläche 20 ist mit einer Deckbeschichtung 3 beschichtet. Die Deckbeschichtung 3 kann aus Epoxidharz, Polyurethan oder Polyharnstoff gefertigt sein, welche ursprünglich in Form eines Harz-Härter-Gemisches auf die erste Oberfläche 20 der Trägerschicht 2 aufgesprüht werden. Für die vorliegende Ausführungsform wird die lösemittelfreie Zweikomponenten Reaktivspritzbeschichtung VIASEAL LCT1616-60 der Firma VIACOR Polymer GmbH verwendet. Diese weist hervorragende elastische Eigenschaften auf und dient als rutschsichere Beschichtung. Das ausgehärtete Produkt weist eine Zugfestigkeit von mindestens 11 N/mm² (DIN 53504), eine Reißdehnung von mindestens 300% (DIN 53504) und eine Shore-A-Härte von ca. 88 (5 d/23°C) (DIN EN ISO 868) auf. Darüber hinaus können beim Aufsprühen der Deckbeschichtung 3 auf die erste Oberfläche 20 Hartkörner mit aufgesprüht werden, um die Rauigkeit einer äußeren Oberfläche der Deckbeschichtung 3 zu erhöhen. In letzterem kann als Deckbeschichtung auch alternativ die lösemittelfreie Zweikomponenten Reaktivspritzbeschichtung VIASEAL LCT1622-60 Firma VIACOR Polymer GmbH verwendet werden. Diese ist vergleichsweise härter eingestellt und eignet sich gut, um Granulat wie zum Beispiel Hartkörner einzubinden.

Der Verbund aus der Trägerschicht 2 und der Deckbeschichtung 3 hält hohen mechanischen Belastungen und starken Temperaturunterschieden stand. Darüber hinaus hält die Verbindung zwischen der Trägerschicht 2 und der Deckbeschichtung 3 auch starken Deformationen stand.

Auf der zweiten Oberfläche 22 der Trägerschicht 2 ist eine klebende Befestigung 4 in Form eines trägerbasierten Klebebands aufgebracht, wobei der Träger einen weichen Schaum umfasst. Dadurch können aufgrund der Elastizität der klebenden Befestigung Unebenheiten in der zu beklebenden Oberfläche ausgeglichen werden. Mittels der klebenden Befestigung 4 kann die Kraft-und Nutzfahrzeugauflagevorrichtung auf den jeweiligen Anwendungsort aufgeklebt werden. Alternativ kann die klebende Befestigung auch ein Transferklebeband, das heißt ein trägerloses Band, umfassen.

Die Kombination der Deckbeschichtung 3, der Trägerschicht 2 und der Klebeschicht 4 ermöglicht eine Kraft- und Nutzfahrzeugauflagevorrichtung bereitzustellen, welche eine funktionale Oberfläche aufweist, auf die Vorrichtung wirkende Kräfte gut verteilen kann und in einfacher Weise am Anwendungsort angebracht werden kann. So kann die Zusammensetzung der Deckbeschichtung 3 derart gewählt werden, dass zum Beispiel rutschhemmende oder gleitbegünstigende Eigenschaften bereitgestellt werden können. Die Trägerschicht 2 in Forme einer Aluminiumleichtbauplatte verleiht der Kraft- und Nutzfahrzeugauflagevorrichtung ausreichende Festigkeits- und Steifigkeitseigenschaften bei einem gleichzeitig vergleichsweise geringen Gewicht. Mittels der klebenden Befestigung 4 kann die Kraft- und Nutzfahrzeugauflagevorrichtung auf unterschiedlichsten Wänden oder Böden von Kraft- und Nutzfahrzeugen befestigt werden. Beispielhaft zu nennen sind Ladebordwände, Seitenwände, Überfahrrampen und dergleichen.

Figur 2 (nicht erfindungsgemäß) zeigt die Kraft- und Nutzfahrzeugauflagevorrichtung aus Figur 1, welche zusätzlich eine Abreißfolie 5 auf der äußeren Oberfläche der klebenden Befestigung 4 aufweist. Die Abreißfolie 5 kann bis kurz vor dem Einbau der Kraft- und Nutzfahrzeugauflagevorrichtung auf der klebenden Befestigung 4 verbleiben. Insbesondere kann der Transport und die Lagerung der Kraft- und Nutzfahrzeugauflagevorrichtung erleichtert werden.

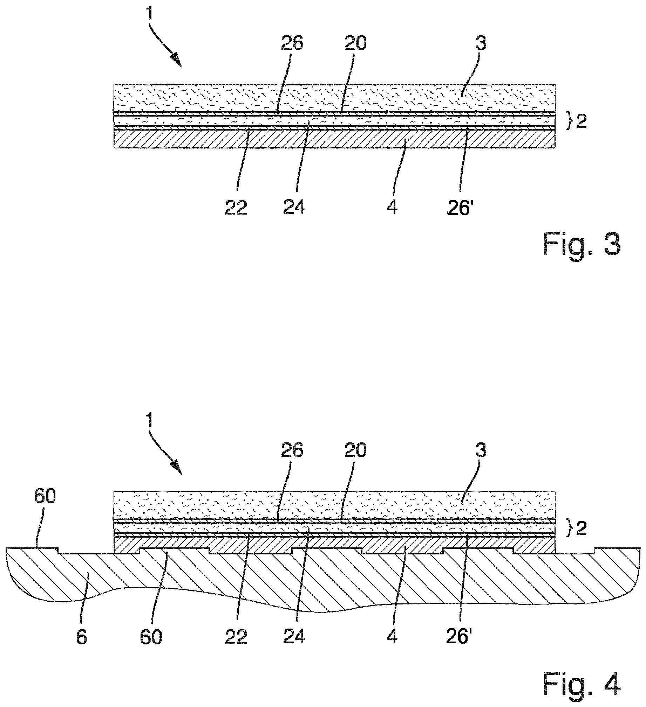

Figur 3 zeigt schematisch eine Schnittansicht eines Lagenaufbaus einer Kraft- und Nutzfahrzeugauflagevorrichtung 1, welche eine Trägerschicht 2 in Form einer Leichtbauplatte aufweist, die einen zwischen zwei Aluminiumschichten 26, 26' eingefassten Polymerschaum 24 umfasst. Der Polymerschaum 24 ist aus Polypropylen gefertigt, welches sich durch eine äußerst geringe Dichte auszeichnet. Eine Trägerschicht 2, bestehend aus zwei Aluminiumschichten 26, 26 und einer dazwischen eingefassten Polypropylen-Polymerschaum-Schicht zeichnet sich durch eine hohe Festigkeit bei einem vergleichsweise geringen Gewicht aus.

Darüber hinaus hat der Polymerschaum 24 den Vorteil, dass er verformt werden kann. So kann die Kraft- und Nutzfahrzeugauflagevorrichtung 1 beispielsweise auch über Eckbereiche durchgehend verbaut werden. Des Weiteren birgt der in den Aluminiumschichten 26, 26' eingefasste Polymerschaum 24 gute Schall- und Wärmedämmungseigenschaften. Die in Figur 3 gezeigte klebende Befestigung 4 ist durch ein Transferklebeband gebildet und auf die dem Polymerschaum 24 abgewandten Seite der Aluminiumschicht 26' geklebt.

Figur 4 zeigt die Kraft- und Nutzfahrzeugauflagevorrichtung 1 aus Figur 3, wobei die klebende Befestigung 4 Unebenheiten des Untergrunds 6 des Kraft- oder Nutzfahrzeugs ausgleicht. Ein solcher unebener Untergrund 6 kann sich beispielsweise aus einer Riffelung auf einer Überfahrrampe ergeben. Bei der klebenden Befestigung 4 handelt es sich um ein Transferklebeband mit. In Figur 4 sind die Unebenheiten durch Vorsprünge 60 abgebildet. Die klebende Befestigung 4 ermöglicht somit eine nahezu konstante Performance der Kraft- und Nutzfahrzeugauflagevorrichtung, unabhängig von der Oberfläche des Kraft- oder Nutzfahrzeugs.

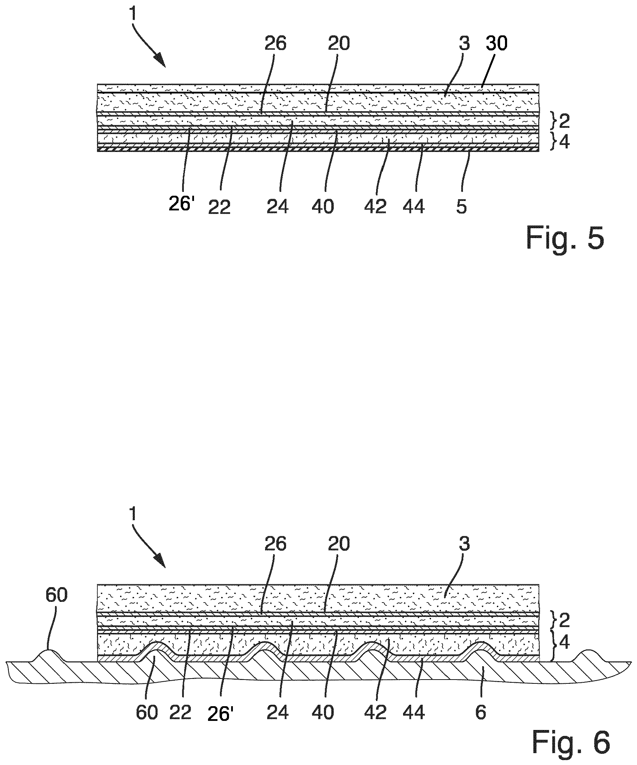

Figur 5 zeigt eine Kraft- und Nutzfahrzeugauflagevorrichtung 1 ähnlich der Kraft- und Nutzfahrzeugauflagevorrichtung aus Figur 3. Im Gegensatz zu dem in Figur 3 gezeigten Transferklebeband weist die in Figur 5 gezeigte Kraft- und Nutzfahrzeugauflagevorrichtung 1 eine Klebeschicht 4 in Form eines trägerbasierten Klebebands auf. Das trägerbasierte Klebeband bildet ein doppelseitiges Klebeband, welches eine erste Klebeschicht 40, einen Träger 42 und eine zweite Klebeschicht 44 umfasst. Der Träger 42 liegt zwischen der ersten Klebeschicht 40 und der zweiten Klebeschicht 44. Die erste Klebeschicht 40 grenzt an die Aluminiumschicht 26' der Trägerschicht 2 an. Auf der unteren Oberfläche der zweiten Klebeschicht 44 ist eine Abreißfolie 5 angeordnet.

Darüber hinaus weist die in Figur 5 gezeigte Kraft- und Nutzfahrzeugauflagevorrichtung 1 eine zweite Deckbeschichtung 30 auf der ersten Deckbeschichtung 3 auf. Die zweite Deckbeschichtung kann eine zusätzliche Funktion bereitstellen und beispielsweise neben Polyurethan, Polyharnstoff und/oder Epoxidharz weitere funktionale Materialien enthalten. Beispielsweise kann die zweite Schicht Rußpartikel oder elektrisch leitende Fasern aufweisen, um der Oberfläche der Kraft- und Nutzfahrzeugauflagevorrichtung 1 eine erhöhte elektrische Leitfähigkeit zu verleihen.

Figur 6 zeigt die Kraft- und Nutzfahrzeugauflagevorrichtung 1 aus Figur 5, wobei die klebende Befestigung 4 Unebenheiten des Untergrunds 6 eines Kraft- oder Nutzfahrzeugs ausgleicht. Die Kraft- und Nutzfahrzeugauflagevorrichtung 1 ist auf den Untergrund 6 aufgeklebt und weist entsprechend keine Abreißfolie mehr auf.

Die von dem Untergrund 6 hervorragenden Vorsprünge 60 werden von der klebenden Befestigung 4 kompensiert. Die zweite Klebeschicht 44 folgt dem Profil des Untergrunds 6. Die Dicke der zweiten Klebeschicht 44 bleibt dabei nahezu konstant. Der Träger 42 hingegen wird in den Bereichen der Vorsprünge 60 komprimiert. Dadurch ist es möglich die Kraft- und Nutzfahrzeugauflagevorrichtung 1 auch auf unebenen, zum Beispiel geriffelten Untergründen anzubringen, ohne dass es zu einer Einbuße der Klebeverbindung zwischen der Kraft- und Nutzfahrzeugauflagevorrichtung 1 und dem Untergrund 6 kommt.

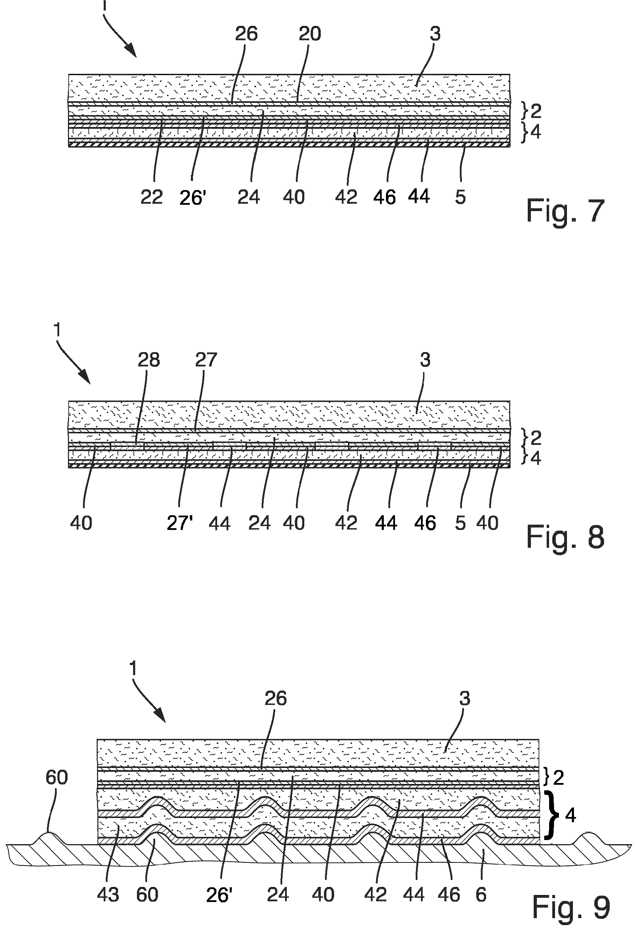

Figur 7 zeigt eine Kraft- und Nutzfahrzeugauflagevorrichtung 1 ähnlich der Kraft- und Nutzfahrzeugauflagevorrichtung aus Figur 5. Die klebende Befestigung 4 weist von der in Figur 5 gezeigten Klebeschicht ab, indem sie eine zusätzliche Klebeschicht zwischen Trägerschicht 2 und Träger 42 umfasst. Insbesondere ist eine erste Klebeschicht 40 an die Anforderungen der Verklebung zur Aluminiumschicht 26' und eine benachbarte dritte Klebeschicht 46 an die Anforderungen der Verklebung zum Träger 42 angepasst. Durch Wahl der entsprechenden ersten und dritten Klebeschicht 40, 46 in Abhängigkeit der Materialien von Trägerschicht 2 und Träger 42 kann eine hochwertige Verklebung, das heißt ein optimaler Zusammenhalt des Verbunds gewährleistet werden. Auf der unteren Oberfläche des Trägers 42 ist eine zweite Klebeschicht 44 aufgetragen. Im nichteingebauten Zustand ist die untere Seite der klebenden Befestigung durch eine Abreißfolie 5 versiegelt.

Figur 8 (nicht erfindungsgemäß) zeigt eine Kraft- und Nutzfahrzeugauflagevorrichtung 1 gemäß Figur 5 mit dem Unterschied, dass die untere Oberfläche der Trägerschicht 2 unterschiedliche Materialien aufweist. Eine Glasfaserschicht 27' ist im Wechsel neben einer Kohlefaserschicht 28 angeordnet. Darüber hinaus ist die klebende Befestigung 4 an die unterschiedliche Materialpaarung der Trägerschicht 2 angepasst, so dass eine erste Klebeschicht 40 die Glasfaserschicht 27' und eine dritte Klebeschicht 46 die Kohlefaserschicht 28 kontaktiert. Durch Wahl der entsprechenden ersten und dritten Klebeschicht 40, 46 in Abhängigkeit der Materialpaarung der Trägerschicht 2 kann eine hochwertige Verklebung, das heißt ein optimaler Zusammenhalt des Verbunds gewährleistet werden. Auf der unteren Oberfläche des Trägers 42 ist eine zweite Klebeschicht 44 aufgetragen. Im nichteingebauten Zustand ist die untere Seite der klebenden Befestigung 4 durch eine Abreißfolie 5 versiegelt.

Figur 9 zeigt eine Kraft- und Nutzfahrzeugauflagevorrichtung 1 gemäß Figur 6 mit dem Unterschied, dass die klebende Befestigung 4 einen weiteren Träger 43 und eine dritte Klebeschicht 46 umfasst. Die klebende Befestigung 4 weist die folgende Schichtreihenfolge auf: erste Klebeschicht 40, Träger 42, zweite Klebeschicht 44, Träger 43 und dritte Klebeschicht. Die von einem Untergrund 6 hervorragenden Vorsprünge 60 werden von der klebenden Befestigung 4 kompensiert. Die zweite und dritte Klebeschichten 44, 46 folgen dem Profil des Untergrunds 6. Die Dicke der zweiten und dritten Klebeschichten 44, 46 bleibt dabei nahezu konstant. Die Träger 42, 43 hingegen werden in den Bereichen der Vorsprünge 60 komprimiert.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 1: Kraft-und Nutzfahrzeugauflagevorrichtung

- 2: Trägerschicht
- 20: Ersten Oberfläche
- 22: Zweiten Oberfläche
- 24: Polymerschaum
- 26, 26': Aluminiumschicht
- 27, 27': Glasfaserschicht
- 28: Kohlefaserschicht

- 3: Deckbeschichtung
- 30: Zweite Deckbeschichtung

- 4: Klebende Befestigung
- 40: Erste Klebeschicht
- 42: Träger
- 43: Träger
- 44: Zweite Klebeschicht
- 46: Dritte Klebeschicht

- 5: Abreißfolie

- 6: Untergrund
- 60: Vorsprung

## Patentansprüche

1. Kraft-und Nutzfahrzeugauflagevorrichtung (1) für eine Ladebordwand, eine Seitenwand, eine Überfahrrampe, und/oder einen Boden eines Kraft- und Nutzfahrzeugs, umfassend:
eine Trägerschicht (2) mit einer ersten Oberfläche (20) und einer zweiten Oberfläche (22), wobei die Trägerschicht (2) eine Leichtbauplatte umfasst,
eine auf der ersten Oberfläche (20) angeordnete Deckbeschichtung (3), wobei die Deckbeschichtung (3) ein Polyurethan, Polyharnstoff und/oder Epoxidharz umfasst, und
eine auf der zweiten Oberfläche (22) angeordnete klebende Befestigung (4)
**dadurch gekennzeichnet, dass**
die Leichtbauplatte einen zwischen zwei Aluminiumschichten (26, 26') eingefassten Polymer umfasst.

2. Kraft-und Nutzfahrzeugauflagevorrichtung (1) nach Anspruch 1, **dadurch gekennzeichnet, dass** die Leichtbauplatte Kunststoffe, Leichtmetalle, wie zum Beispiel Aluminium, und/oder Faseverbundwerkstoffe oder Kombinationen daraus umfasst.

3. Kraft-und Nutzfahrzeugauflagevorrichtung (1) nach Anspruch 1 oder 2, **dadurch gekennzeichnet, dass** auf der ersten Deckbeschichtung (3) eine zweite Deckbeschichtung (30) angeordnet ist.

4. Kraft-und Nutzfahrzeugauflagevorrichtung (1) nach einem der vorhergehenden Ansprüche, **dadurch gekennzeichnet, dass** die Leichtbauplatte einen zwischen zwei Aluminiumschichten (26, 26') eingefassten Polymerschaum (24) umfasst.

5. Kraft-und Nutzfahrzeugauflagevorrichtung (1) nach Anspruch 4, **dadurch gekennzeichnet, dass** der Polymerschaum (24) ein Polypropylenschaum oder ein Polyethylenschaum ist.

6. Kraft-und Nutzfahrzeugauflagevorrichtung (1) nach einem der vorhergehenden Ansprüche, **dadurch gekennzeichnet, dass** das Flächengewichtsverhältnis der Trägerschicht (2) gegenüber der Deckbeschichtung (3) und der klebenden Befestigung (4) in einem Bereich von 2 bis 5 liegt.

7. Kraft-und Nutzfahrzeugauflagevorrichtung (1) nach einem der vorhergehenden Ansprüche, **dadurch gekennzeichnet, dass** die Deckbeschichtung (3) einen Rutschhemmungswert nach DIN 51130 von mindestens R10 aufweist.

8. Kraft-und Nutzfahrzeugauflagevorrichtung (1) nach einem der vorhergehenden Ansprüche, **dadurch gekennzeichnet, dass** die Deckbeschichtung (3) einen Gleitreibwert nach DIN-EN 12195-1 von mindestens 0,6 µD aufweist.

9. Kraft-und Nutzfahrzeugauflagevorrichtung (1) nach einem der vorhergehenden Ansprüche, **dadurch gekennzeichnet, dass** die Deckbeschichtung (3) eine äußere Oberfläche aufweist, die glatt, rau, oder strukturiert ist.

10. Kraft-und Nutzfahrzeugauflagevorrichtung (1) nach einem der vorhergehenden Ansprüche, **dadurch gekennzeichnet, dass** die Deckbeschichtung (3) eine Bruchdehnung von mindestens 150% aufweist.

11. Kraft-und Nutzfahrzeugauflagevorrichtung (1) nach einem der vorhergehenden Ansprüche, **dadurch gekennzeichnet, dass** die klebende Befestigung (4) ein trägerbasiertes Klebeband, ein Transferklebeband oder einen Flüssigklebstoff umfasst.

12. Kraft-und Nutzfahrzeugauflagevorrichtung (1) nach Anspruch 11, **dadurch gekennzeichnet, dass** das trägerbasierte Klebeband einen weichelastischen Träger, bevorzugt einen Schaumträger umfasst.

13. Kraft-und Nutzfahrzeugauflagevorrichtung (1) nach einem der vorhergehenden Ansprüche, **dadurch gekennzeichnet, dass** die klebende Befestigung (4) Acrylate, Polyurethan, Epoxide, Silikon, und/oder Kautschuk umfasst.

14. Kraft-und Nutzfahrzeugauflagevorrichtung (1) nach einem der vorhergehenden Ansprüche, **dadurch gekennzeichnet, dass** auf einer äußeren Oberfläche der klebenden Befestigung (4) eine Abreißfolie (5) angeordnet ist.

15. Kraft-und Nutzfahrzeugauflagevorrichtung (1) nach einem der vorhergehenden Ansprüche, **dadurch gekennzeichnet, dass** in den Lagenaufbau der Deckbeschichtung (3), der Trägerschicht (2) und der klebenden Befestigung (4) ein zusätzliches Befestigungsmittel zum Befestigen der Kraft-und Nutzfahrzeugauflagevorrichtung (1) auf einem Untergrund eines Kraft- oder Nutzfahrzeugs integriert ist.

16. Verfahren zur Herstellung einer Kraft-und Nutzfahrzeugauflagevorrichtung (1) gemäß einem der vorhergehenden Ansprüche, die Schritte umfassend:
Bereitstellen der Trägerschicht (2),
Aufbringen der klebenden Befestigung (4) auf der zweiten Oberfläche der Trägerschicht (2), und
Beschichten der ersten Oberfläche der Trägerschicht (2) mit der Deckbeschichtung (3) im Sprüh- oder Gießverfahren.

17. Verfahren zur Herstellung einer Kraft-und Nutzfahrzeugauflagevorrichtung (1) nach Anspruch 16, **dadurch gekennzeichnet, dass** beim Beschichten der Trägerschicht (2) mit der Deckbeschichtung (3) Feststoffkörper wie zum Beispiel Hartkorn mit versprüht oder vergossen werden.

18. Verfahren zur Herstellung einer Kraft-und Nutzfahrzeugauflagevorrichtung (1) nach Anspruch 16 oder 17, **dadurch gekennzeichnet, dass** in einem abschließenden Sprühauftragschritt die Sprühbeschichtung aus einem Abstand erfolgt, der derart bemessen ist, dass ein aufgesprühter Kunststoff zu reagieren beginnt, bevor er die Deckbeschichtung (3) erreicht, wodurch eine unebene Oberfläche auf der Deckbeschichtung (3) erzeugt wird.

## Claims

1. Support device for a motor vehicle and commercial vehicle (1) for a tail lift, a side wall, a drive-over ramp and/or a floor of a motor vehicle and commercial vehicle, comprising:
a carrier layer (2) having a first surface (20) and a second surface (22), wherein the carrier layer (2) comprises a lightweight building board,
a covering coating (3) arranged on the first surface (20), wherein the covering coating (3) comprises a polyurethane, polyurea and/or epoxy resin, and
an adhesive fastening (4) arranged on the second surface (22)
**characterised in that**
the lightweight building board comprises a polymer enclosed between two aluminium layers (26, 26').

2. Support device for a motor vehicle and commercial vehicle (1) according to claim 1, **characterised in that** the lightweight building board comprises plastics, light metals, such as for example aluminium, and/or fibre composite materials or combinations thereof.

3. Support device for a motor vehicle and commercial vehicle (1) according to claim 1 or 2, **characterised in that** a second covering coating (30) is arranged on the first covering coating (3).

4. Support device for a motor vehicle and commercial vehicle (1) according to any of the preceding claims, **characterised in that** the lightweight building board comprises a polymer foam (24) enclosed between two aluminium layers (26, 26').

5. Support device for a motor vehicle and commercial vehicle (1) according to claim 4, **characterised in that** the polymer foam (24) is a polypropylene foam or a polyethylene foam.

6. Support device for a motor vehicle and commercial vehicle (1) according to any of the preceding claims, **characterised in that** the surface weight ratio of the carrier layer (2) with respect to the covering coating (3) and the adhesive fastening (4) lies in a range from 2 to 5.

7. Support device for a motor vehicle and commercial vehicle (1) according to any of the preceding claims, **characterised in that** the covering coating (3) has a slip resistance value according to DIN 51130 of at least RIO.

8. Support device for a motor vehicle and commercial vehicle (1) according to any of the preceding claims, **characterised in that** the covering coating (3) has a coefficient of sliding friction according to DIN-EN 12195-1 of at least 0.6 µD.

9. Support device for a motor vehicle and commercial vehicle (1) according to any of the preceding claims, **characterised in that** the covering coating (3) has an outer surface which is smooth, raw or structured.

10. Support device for a motor vehicle and commercial vehicle (1) according to any of the preceding claims, **characterised in that** the covering coating (3) has an elongation at break of at least 150%.

11. Support device for a motor vehicle and commercial vehicle (1) according to any of the preceding claims, **characterised in that** the adhesive fastening (4) comprises a carrier-based adhesive tape, a transfer adhesive tape or a liquid adhesive.

12. Support device for a motor vehicle and commercial vehicle (1) according to claim 11, **characterised in that** the carrier-based adhesive tape comprises a soft elastic carrier, preferably a foam carrier.

13. Support device for a motor vehicle and commercial vehicle (1) according to any of the preceding claims, **characterised in that** the adhesive fastening (4) comprises acrylates, polyurethane, epoxides, silicone and/or rubber.

14. Support device for a motor vehicle and commercial vehicle (1) according to any of the preceding claims, **characterised in that** a tear-off film (5) is arranged on an outer surface of the adhesive fastening (4).

15. Support device for a motor vehicle and commercial vehicle (1) according to any of the preceding claims, **characterised in that** an additional fastening means for fastening the support device for a motor vehicle and commercial vehicle (1) on a surface of a motor vehicle or commercial vehicle is integrated in the layer structure of the covering coating (3), the carrier layer (2) and the adhesive fastening (4).

16. Method for producing a support device for a motor vehicle and commercial vehicle (1) according to any of the preceding claims, comprising the steps:
providing the carrier layer (2),
applying the adhesive fastening (4) to the second surface of the carrier layer (2), and
coating the first surface of the carrier layer (2) with the covering coating (3) in a spraying or casting process.

17. Method for producing a motor vehicle and commercial vehicle (1) according to claim 16, **characterised in that** when coating the carrier layer (2) with the covering coating (3) solid bodies such as for example hard grit are also sprayed or cast.

18. Method for producing a motor vehicle and commercial vehicle (1) according to claim 16 or 17, **characterised in that** in a subsequent spraying application step, spray coating is carried out at a distance which is measured such that a sprayed-on plastic begins to react before it reaches the covering coating (3), as a result of which an uneven surface is created on the covering coating (3).

## Revendications

1. Dispositif formant enduit pour véhicule automobile utilitaire (1) destiné à une ridelle de chargement, une ridelle latérale, une rampe d'accès et/ou un plancher d'un véhicule automobile utilitaire, comprenant :
une couche de support (2) avec une première surface (20) et une seconde surface (22), dans lequel la couche de support (2) comprend un panneau léger,
un revêtement superficiel (3) agencé sur la première surface (20), dans lequel le revêtement superficiel (3) comprend un polyuréthane, un polycarbamide et/ou une résine époxy, et
une fixation adhésive (4) agencée sur la seconde surface (22), **caractérisé en ce que**
le panneau léger comprend un polymère enfermé entre deux couches d'aluminium (26, 26').

2. Dispositif formant enduit pour véhicule automobile utilitaire (1) selon la revendication 1, **caractérisé en ce que** le panneau léger comprend des matières plastiques, des métaux légers tels que l'aluminium et/ou des matériaux composites à base de fibres ou des combinaisons de ceux-ci.

3. Dispositif formant enduit pour véhicule automobile utilitaire (1) selon la revendication 1 ou 2, **caractérisé en ce qu'**un second revêtement superficiel (30) est agencé sur le premier revêtement superficiel (3).

4. Dispositif formant enduit pour véhicule automobile utilitaire (1) selon l'une quelconque des revendications précédentes, **caractérisé en ce que** le panneau léger comprend une mousse polymère (24) enfermée entre deux couches d'aluminium (26, 26').

5. Dispositif formant enduit pour véhicule automobile utilitaire (1) selon la revendication 4, **caractérisé en ce que** la mousse polymère (24) est une mousse de polypropylène ou une mousse de polyéthylène.

6. Dispositif formant enduit pour véhicule automobile utilitaire (1) selon l'une quelconque des revendications précédentes, **caractérisé en ce que** le rapport de grammage de la couche de support (2) par rapport au revêtement superficiel (3) et à la fixation adhésive (4) se situe dans une plage comprise entre 2 et 5.

7. Dispositif formant enduit pour véhicule automobile utilitaire (1) selon l'une quelconque des revendications précédentes, **caractérisé en ce que** le revêtement superficiel (3) présente une valeur de glissance selon la norme DIN 51130 d'au moins R10.

8. Dispositif formant enduit pour véhicule automobile utilitaire (1) selon l'une quelconque des revendications précédentes, **caractérisé en ce que** le revêtement superficiel (3) présente un coefficient de frottement dynamique selon la norme DIN EN 12195-1 d'au moins 0,6 µD.

9. Dispositif formant enduit pour véhicule automobile utilitaire (1) selon l'une quelconque des revendications précédentes, **caractérisé en ce que** le revêtement superficiel (3) présente une surface extérieure lisse, rugueuse ou structurée.

10. Dispositif formant enduit pour véhicule automobile utilitaire (1) selon l'une quelconque des revendications précédentes, **caractérisé en ce que** le revêtement superficiel (3) présente un allongement à la rupture d'au moins 150 %.

11. Dispositif formant enduit pour véhicule automobile utilitaire (1) selon l'une quelconque des revendications précédentes, **caractérisé en ce que** la fixation adhésive (4) comprend un ruban adhésif sur support, un ruban de transfert adhésif ou un adhésif liquide.

12. Dispositif formant enduit pour véhicule automobile utilitaire (1) selon la revendication 11, **caractérisé en ce que** le ruban adhésif sur support comprend un support flexible, de manière préférée un support en mousse.

13. Dispositif formant enduit pour véhicule automobile utilitaire (1) selon l'une quelconque des revendications précédentes, **caractérisé en ce que** la fixation adhésive (4) comprend des acrylates, du polyuréthane, des résines époxydes, du silicone et/ou du caoutchouc.

14. Dispositif formant enduit pour véhicule automobile utilitaire (1) selon l'une quelconque des revendications précédentes, **caractérisé en ce qu'**un film décollable (5) est agencé sur une surface extérieure de la fixation adhésive (4).

15. Dispositif formant enduit pour véhicule automobile utilitaire (1) selon l'une quelconque des revendications précédentes, **caractérisé en ce qu'**un moyen de fixation supplémentaire permettant de fixer le dispositif formant enduit pour véhicule automobile utilitaire (1) sur un plancher d'un véhicule automobile utilitaire est intégré dans la structure de couches de la couche superficielle (3), de la couche de support (2) et de la fixation adhésive (4).

16. Procédé de fabrication d'un dispositif formant enduit pour véhicule automobile utilitaire (1) selon l'une quelconque des revendications précédentes, comprenant les étapes consistant à :
fournir la couche de support (2),
appliquer la fixation adhésive (4) sur la seconde surface de la couche de support (2), et
recouvrir la première surface de la couche de support (2) avec le revêtement superficiel (3) par pulvérisation ou versage.

17. Procédé de fabrication d'un dispositif formant enduit pour véhicule automobile utilitaire (1) selon la revendication 16, **caractérisé en ce que** des corps solides tels que des grains durs sont projetés ou versés lorsque la couche de support (2) est recouverte avec le revêtement superficiel (3).

18. Procédé de fabrication d'un dispositif formant enduit pour véhicule automobile utilitaire (1) selon la revendication 16 ou 17, **caractérisé en ce que**, dans une étape finale d'application par pulvérisation, le revêtement par pulvérisation a lieu à une distance qui est mesurée de telle manière qu'un plastique pulvérisé commence à réagir avant d'atteindre le revêtement superficiel (3), ce qui génère une surface inégale sur le revêtement superficiel (3).
